# EUROPÄISCHE PATENTANMELDUNG

(11) **EP 2 873 492 A1**
(43) Veröffentlichungstag der Anmeldung: **20.05.2015**
(21) Anmeldenummer: 13193477.0
(22) Anmeldetag: 19.11.2013
(51) Int. Cl.: B25F 5/00

(54) **Steuerungsverfahren eines Vibrationsdosimeters**

(71) Anmelder: HILTI Aktiengesellschaft, 9494 Schaan (LI)
(72) Erfinder: Schmidt, Peer, 88131 Lindau (DE)
(74) Vertreter: Hilti Aktiengesellschaft Corporate Intellectual Property

(57) **Zusammenfassung**

Steuerungsverfahren zum Aufzeichnen einer Vibrationsbelastung durch einVibrationsdosimeter (7) für eine Handwerkzeugmaschine. Das Steuerungsverfahren basiert auf einem geräteseitigen Modul (8) und einem anwenderseitigen Modul (9). Der modulare Aufbau ermöglicht eine hohe Flexibilität in der Verwendung des Vibrationsdosimeters (7), insbesondere bei Arbeitsplätzen mit mehreren Geräten und mehreren Anwendern, ohne dass die Anwender eines der Module (8, 9) konfigurieren müssen.

## Beschreibung

### GEBIET DER ERFINDUNG

Die vorliegende Erfindung betrifft ein Steuerungsverfahren eines Vibrationsdosimeters zum Bestimmen einer Vibrationsbelastung, die ein Anwender durch Verwendung einer oder mehrerer Handwerkzeugmaschinen ausgesetzt ist.

Vibrationsdosimeter dienen der Kontrolle des Arbeitsschutzes von, insbesondere angestellten, Handwerkern. Auf beispielsweise einer Baustelle sind mehrere Handwerker tätig und bedienen während des Tages auch unterschiedliche Handwerkzeugmaschinen, z.B. Sägen, Schrauber, Bohrhämmer, Meißel. Jede der Handwerkzeugmaschinen belastet die Anwender unterschiedlich stark. Die Vibrationsdosimeter müssen in dieser Arbeitsumgebung für jeden der Anwender die individuelle Vibrationsdosis erfassen. Trotz der Flexibilität muss das Vibrationsdosimeter ohne jeglichen Eingriff der Handwerker funktionieren.

### OFFENBARUNG DER ERFINDUNG

Das erfindungsgemäße Steuerungsverfahren arbeitet auf einem Vibrationsdosimeter das ein an einer vibrierenden Handwerkzeugmaschine zu befestigendes, geräteseitigen Modul mit einem in einer Kennung codierten Vibrationsbelastungswerts, einem Taktgeber, einem Zähler, einem Beschleunigungssensor und einer Sendeeinheit und ein von einem Anwender zu tragendes, anwenderseitiges Modul mit einer Empfangseinheit, einer Uhr, einem Speicher und einer Auswertungseinheit aufweist. Das Steuerungsverfahren führt die Schritte auf dem geräteseitigen Modul aus: Ausgeben eines Wecksignals, wenn ein von dem Beschleunigungssensor erfasster Beschleunigungswert in dem geräteseitigen Modul größer als ein Schwellwert ist; Starten eines periodischen Taktsignals des Taktgebers und Rücksetzen des Zählers durch das Wecksignal; periodisches Inkrementieren des Zählers durch das Taktsignal; periodisches Senden eines Funksignals mittels der Sendeeinheit, wobei das Funksignal den aktuellen Zählerstand des Zählers und die Kennung des geräteseitigen Moduls beinhaltet. Das Steuerungsverfahren führt die Schritte auf dem geräteseitigen Modul aus: Empfangen des Funksignals mittels der Empfangseinheit; Festhalten eines Zeitsignals der Uhr beim Empfang des Funksignals; Ermitteln des Vibrationsbelastungswerts aus der in dem Funksignal übertragenen Kennung; Ermitteln einer Dauer der aktuellen Vibrationsbelastung basierend auf dem im Funksignal übertragenen Zählerstand; Erhöhen der erfassten Vibrationsdosis basierend auf dem Vibrationsbelastungswerts und der Dauer der aktuellen Vibrationsbelastung.

Das geräteseitige Modul bestimmt die aktive Dauer der Handwerkzeugmaschine, indem ermittelt wird, wie lange eine Vibration auftritt. Die Vibration wird nicht absolut bestimmt, sondern in dem geräteseitigen Modul ist ein Schätzwert für die Vibrationsbelastung hinterlegt. Die Dauer und der Schätzwert werden auf das anwenderseitige Modul übertragen. Der Energieverbrauch des gerätseitigen Moduls kann hierdurch sehr gering gehalten werden. Ein Austauschen oder Prüfen einer Batterie des geräteseitigen Moduls ist nicht nötig. Das anwenderseitige Modul übernimmt das Sammeln und die Berechnung der Vibrationsdosis.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrhammer
Fig. 2 ein geräteseitiges Modul und ein anwenderseitiges Modul eines Vibrationsdosimeters
Fig. 3 Signale des geräteseitigen Moduls

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

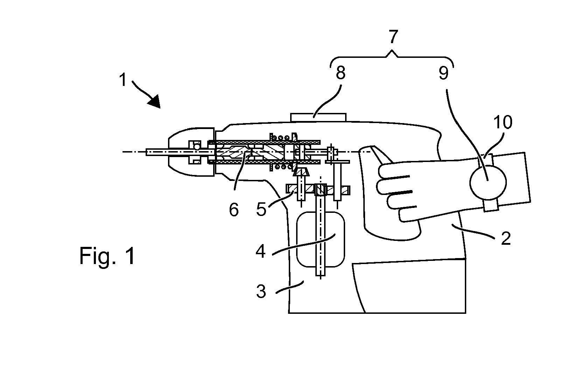

Fig. 1 zeigt schematisch einen Bohrhammer **1** als Beispiel für eine vibrierende Handwerkzeugmaschine. Der Bohrhammer **1** hat einen Handgriff **2,** der starr oder gedämpft mit einem Maschinengehäuse **3** verbunden ist. Innerhalb des Maschinengehäuses **3** sind Antriebskomponenten, wie z.B. ein Elektromotor **4,** ein Getriebe **5,** ein Schlagwerk **6** etc. angeordnet. Deren Vibrationen, insbesondere des Schlagwerks **6,** übertragen sich auf den Handgriff **2.** Der Anwender kann bleibende Schäden an Hand und Arm erleiden, wenn diese einer zu hohen und dauerhaften Vibration ausgesetzt sein. Mehrere Normen, u.A. ISO Standard 5349-1, befassen sich mit Grenzwerten für eine Vibrationsdosis, d.h. einer über die Zeit gewichteten Belastung durch Vibrationen. Das beispielhafte nachrüstbare modulare Vibrationsdosimeter **7** ermöglicht dem Anwender und seinem Arbeitgeber die gesundheitsschädliche Arbeitsbelastungen zu erkennen.

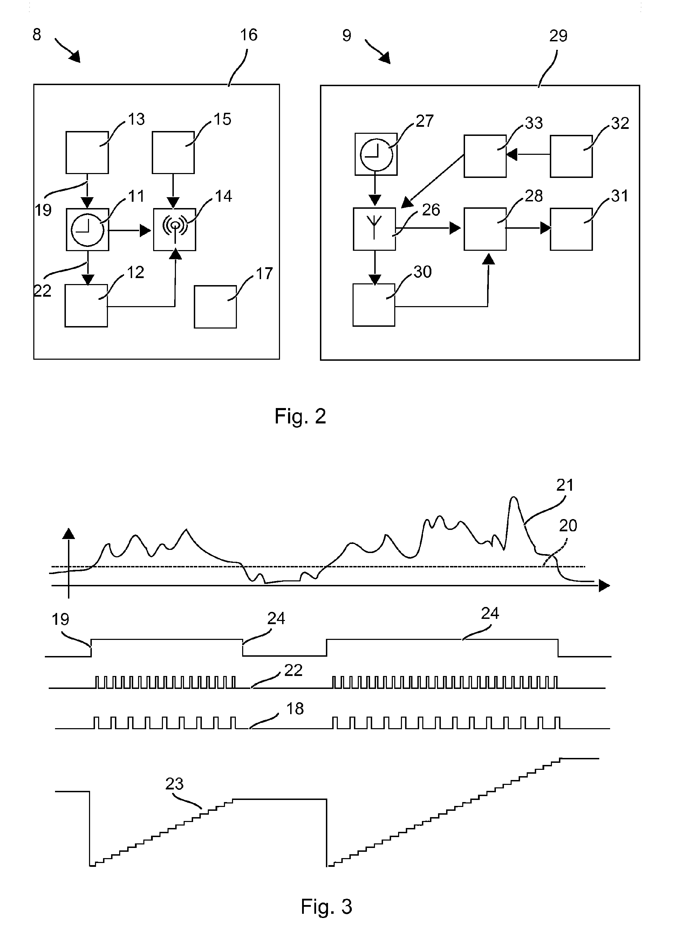

Der beispielhafte Bohrhammer **1** ist mit einem nachrüstbaren modularen Vibrationsdosimeter **7** versehen. Das Vibrationsdosimeter **7** beinhaltet ein geräteseitiges Modul **8** (Fig. 2) und ein anwenderseitiges Modul **9.** Das geräteseitige Modul **8** wird an dem Maschinengehäuse **3,** vorzugsweise dauerhaft, befestigt. Beispielsweise kann das geräteseitige Modul **8** angeklebt oder angeklemmt werden. Die Positionierung und Ausrichtung des geräteseitigen Moduls **8** kann der Anwender frei wählen, da, wie nachfolgend ersichtlich, das geräteseitige Modul **8** keine Messung der Amplitude der Vibrationen durchführt. Das anwenderseitige Modul **9** trägt der Anwender mit sich. Beispielsweise kann das anwenderseitige Modul **9** gleich einer Uhr mit einem Armband **10** versehen am Handgelenk getragen werden. Für die bestimmungsgemäße Funktion des Vibrationsdosimeters **7** ist jedoch nur ein Mitführen des anwenderseitigen Moduls **9** durch den Anwender notwendig. Zum Beispiel kann das anwenderseitige Modul **9** auch in der Hosentasche oder um den Hals getragen werden.

Das geräteseitige Modul **8** enthält einen Taktgeber **11,** einen Zähler **12,** einen Beschleunigungssensor **13,** eine Sendeeinheit **14** und einen Speicher **15** mit einer elektronisch auslesbaren Kennung. Vorzugsweise sind die genannten Komponenten in einem gekapselten Gehäuse **16** zusammen mit einer Batterie **17** untergebracht. Das Gehäuse **16** kann an einer beliebigen Stelle an dem Maschinengehäuse **3** befestigt werden.

Die Komponenten des geräteseitigen Moduls **8** führen ein einfaches und damit energiesparendes Steuerungsverfahren aus. Insbesondere ist der Energieverbrauch minimiert, um eine Lebensdauer der Batterie **17** bei einer typischen Verwendung von etwa fünf Jahren zu erreichen. Die Sendeeinheit **14** ist in einen Ruhemodus versetzbar, in welchem diese keine Funksignale **18** aussendet. Vorzugsweise können auch der Taktgeber **11** und der Zähler **12** deaktiviert werden. Eine verbrauchsarme Weckeinrichtung basiert auf dem Beschleunigungssensor **13.** Der Beschleunigungssensor **13** erzeugt ein Wecksignal **19,** sobald eine Beschleunigung einen Schwellwert **20** überschreitet (Fig. 3). Der Schwellwert **20** liegt typischerweise oberhalb von Beschleunigungswerten **21,** die bei einem Transport oder bei einer im Leerlauf arbeitenden Handwerkzeugmaschine auftreten, und unterhalb von Beschleunigungswerten, die in der Norm ISO Standard 5349-1 als relevant für die physische Belastung des Anwenders angenommen sind, z.B. liegt der Schwellwert **20** im Bereich von 2 m/s2 (Meter pro Quadratsekunde) bis 8 m/s2.

Das Wecksignal **19** startet den Taktgeber **11.** Der Taktgeber **11** erzeugt ein periodisches Taktsignal **22,** z.B. mit einer Taktrate zwischen 0,2 s (Sekunden) und 2 s. Der Zählerstand **23** des Zählers **12** wird von dem Wecksignal **19** auf Null zurückgesetzt. Der Zählerstand **23** wird mit jedem Taktsignal **22** inkrementiert; Taktgeber **11** und Zähler **12** bilden eine Stoppuhr nach. Der Taktgeber **11** bleibt solange aktiv, wie der Beschleunigungssensor **13** eine den Schwellwert **20** überschreitende Beschleunigung **21** erfasst (vgl. Fig. 3). Der Beschleunigungssensor **13** gibt ein Stoppsignal **24** an den Taktgeber **11** aus, wenn der Beschleunigungswert **21** den Schwellwert **20** unterschreitet. Der Zähler **12** wird daraufhin nicht weiter erhöht. Der Zähler **12** erfasst somit die Dauer, für welche das gerätseitige Modul **8** durchgehend einer signifikanten Vibration, z.B. für die Dauer der Inbetriebnahme der Handwerkzeugmaschine **1,** ausgesetzt ist. Das Wecksignal **19** und das Stoppsignal **24** können beispielsweise die steigende bzw. fallende Flanke eines am Ausgang des Beschleunigungssensors **13** anliegenden, die erfasste Beschleunigung anzeigenden Pegels **25** sein. Der von dem Beschleunigungssensor **13** ausgegebene Pegel **25** ist vorzugsweise binär, d.h. zeigt nur an, ob die Beschleunigung geringer oder größer als der Schwellwert **20** ist.

Das Wecksignal **19** startet die Sendeeinheit **14.** Die Sendeeinheit **14** ist beispielsweise ein Bluetooth-Low-Energy Sender. Die Sendeeinheit **14** hat nur eine unidirektionale Kommunikation. Die abgegebene Sendeleistung der Sendeeinheit **14** ist so gewählt, dass vorzugsweise ein Empfang auf einen Senderadius von 2 m (Meter) beschränkt ist. Die geräteseitigen Module **8** haben alle die gleiche Sendeleistung. Die Feldstärke im Abstand von einem Meter zu dem geräteseitigen Modul **8,** d.h. die empfangene Sendeleistung in einem Meter Entfernung, ist somit bekannt.

Die Sendeeinheit **14** übermittelt zwischen dem Wecksignal **19** und dem Stoppsignal **24** in einer Sequenz periodisch den Zählerstand **23.** Die Senderate ist beispielsweise gleich der Taktrate des Taktgebers **11;** die Taktrate kann auch ein Vielfaches der Senderate sein. Vorzugsweise wird wenigstens alle zwei Sekunden ein Zählerstand **23** übermittelt. Zwischen zwei aufeinanderfolgenden Übermittlungen erhöht sich der Zählerstand **23** entsprechend der festen Taktrate. Der Bohrhammer **1** ist beispielsweise beim Bohren eines Loches für 18 s im Einsatz. Der Taktgeber **11** prüft jede Sekunde den Beschleunigungswert des Beschleunigungssensors **13** ab. Die Sendeeinheit **14** sendet beispielsweise im festen Abstand von 2 s. Die übermittelten Zählerstände **23** erhöhen sich schrittweise um zwei. Erfolgt das Stoppsignal **24** hält der Taktgeber **11** an. Die Sequenz ist beendet. Der zeitliche Abstand zwischen dem letzten übermittelten Funksignal **18** und dem nächstfolgenden Funksignal **18** einer neuen Sequenz hängt von dem Anwender ab. Die beiden Funksignale **18** folgen wahrscheinlich nicht in einem Abstand von 2 s, 4 s oder 6 s. Zudem beginnt der Zählerstand **23** wieder bei Null. Die Sendeeinheit **14** kann den letzten Zählerstand **23** nach Erhalt des Stoppsignals **24** mehrfach wiederholt senden, z.B. bis zu dreimal.

Die Sendeeinheit **14** liest den Speicher **15** aus und übermittelt mit dem Sendetakt zu dem Zählerstand auch die Kennung des geräteseitigen Moduls **8.** Die Kennung beinhaltet einen Vibrationsbelastungswert, welcher die Handwerkzeugmaschine **1** charakterisiert, an welchem das geräteseitige Modul **8** befestigt ist. Der Vibrationsbelastungswert durch die Handwerkzeugmaschine **1** kann genormt nach dem ISO Standard 5349-1 bestimmt werden. Die Werte sind unter Anderem in dem Handbuch der Handwerkzeugmaschine angegeben. Der Vibrationsbelastungswert kann von dem Anwender in das geräteseitige Modul **8** einprogrammiert werden oder die geräteseitigen Module **8** werden fabrikseitig vorprogrammiert für die verschiedenen Geräte, Modelle und Hersteller angeboten. Der Vibrationsbelastungswert kann in verschiedenster Weise in der Kennung codiert sein. Vorzugsweise ist der Vibrationsbelastungswert im Klartext in der Kennung enthalten, und ohne Rückgriff auf weitere Tabellen auslesbar. Der Vibrationsbelastungswert kann ein einzelner Beschleunigungswert an dem Handgriff **2** sein, der bei einer genormten Belastung auftrifft. Der Vibrationsbelastungswert kann auch mehrere Beschleunigungswerte beinhalten, die nach unterschiedlichen z.B. länderspezifischen Normen ermittelt sind.

Das anwenderseitige Modul **9** hat eine Empfangseinheit **26,** eine Uhr **27** und eine Auswertungseinheit **28.** Die Komponenten sind vorzugsweise in einem Gehäuse **29** angeordnet. Das Gehäuse **29** kann ein Armband **10,** einen Clip, einen Klettverschluss oder ähnliches aufweisen, um das anwenderseitige Modul **9** am Körper oder an der Kleidung zu anzubringen.

Die Empfangseinheit **26** kann die Funksignale **18** der Sendeeinheit **14** der gerätseitigen Module **9** empfangen. Eine Zuordnung des geräteseitigen Moduls **8** an einer von einem Anwender gehaltenen Handwerkzeugmaschine **1** und des von dem Anwender mitgeführten anwenderseitigen Moduls **9** erfolgt über die Sendeleistung. Die Empfangseinheit **26** unterdrückt Funksignale **18,** deren Signalleistung unterhalb eines Schwellwerts liegen. Der Schwellwert entspricht der Signalleistung eines ein Meter entfernten geräteseitigen Moduls **8.**

Die Empfangseinheit **26** ermittelt aus dem empfangenen Funksignal **18** den übermittelten Zählerstand. Der Zählerstand gibt die Dauer an, für welche die Handwerkzeugmaschine **1** bisher durchgehend in Betrieb ist. Der Zählerstand **23** wird mit der Senderate übertragen. Störungen können den Empfang einzelner Funksignale **18** unterdrücken. Die Empfangseinheit **26** prüft, ob aufeinanderfolgend empfangene Funksignale **18** zu einer Sequenz gehören, d.h. zu einem durchgehenden Betrieb der Handwerkzeugmaschine **1,** oder ob die Funksignale **18** zu verschiedenen Sequenzen gehören, zwischen denen der Betrieb unterbrochen oder die Vibrationen sich stark reduziert haben und entsprechend ein Stoppsignal **24** erzeugt wurde. Ist der zuletzt empfangene Zählerstand kleiner als der zu vorletzt empfangene Zählerstand, gehört der zuletzt empfangene Zählerstand zu einer neuen Sequenz. Die Empfangseinheit **26** hält zu jedem empfangenen Funksignale **18** ein Zeitsignal seiner Uhr **27** fest. Die Zeitdifferenz zwischen den festgehaltenen Zeitsignalen muss gleich dem Produkt der Senderate mit der Differenz der aufeinanderfolgend empfangenen Zählerständen übereinstimmen, anderenfalls gehört der zuletzt empfangene Zählerstand zu einer neuen Sequenz. Die abgeschlossene Sequenz wird in einem Speicher **30** neben den bereits archivierten Sequenzen archiviert. Die abgespeicherten Belastungsdaten beinhalten beispielsweise das Zeitsignal der Uhr **27,** den höchsten empfangenen Zählerstand der Sequenz und die in dem empfangenen Funksignal 18 enthaltene Kennung oder den Vibrationsbelastungswert. Zeitpunkt, Dauer und Intensität der Vibrationsbelastung des Anwenders werden somit aufgezeichnet.

Die Empfangseinheit **26** bestimmt aus dem empfangenen Funksignal **18** die Kennung. In dem beschriebenen Beispiel ist die Kennung ein Maß für eine genormte Vibrationsbelastung durch die Handwerkzeugmaschine **1.** Die Auswertungseinheit **28** ermittelt aus den im Speicher **30** abgelegten Zählerständen und Kennungen und dem zuletzt empfangenen Zählerstand und zuletzt empfangenen Kennung die Vibrationsdosis vorzugsweise nach dem ISO Standard 5349-1. Die Norm basiert auf einem gewichteten Mittel der Vibrationsbelastung über verschieden lange Zeitspannen. Das anwenderseitige Modul **9** hat vorzugsweise eine Anzeige **31,** welche die aktuell bestimmte Vibrationsdosis anzeigt.

Der Anwender kann mehrere Handwerkzeugmaschinen **1** in Gebrauch haben, z.B. neben dem Bohrhammer, eine Kreissäge, einen Elektroschrauber, insbesondere einen Schlagschrauber. Jede der Handwerkzeugmaschinen **1** ist mit einem eigenen geräteseitigen Modul **8** versehen. Die geräteseitigen Module **8** haben eine unterschiedliche Kennung, zumindest wenn sich die Handwerkzeugmaschinen in ihrer Vibrationsbelastung unterscheiden. Der Anwender trägt dauerhaft das gleiche, vorzugsweise auf ihn/sie personalisierte, anwenderseitige Modul **9.** Beim Wechsel der Handwerkzeugmaschine **1** erkennt das anwenderseitige Modul **9** bei der Prüfung, dass die neuen Funksignale **18** zu einer neuen Sequenz gehören. Zudem liest es die neue Kennung aus dem empfangenen Funksignal **18** aus. Die Auswertungseinheit **28** kann basierend auf den abgespeicherten Belastungsdaten und dem neu übermittelten Zählerstand und Kennung die aktuelle Vibrationsdosis bestimmen, ohne dass der Anwender etwas ein- oder umstellen muss. Jeder Anwender hat ein eigenes anwenderseitiges Modul **9.** Ein Tausch der Handwerkzeugmaschinen zwischen den Anwendern hat keinen Einfluss auf die jeweils individuell erfasste Vibrationsdosis.

Das anwenderseitige Modul **9** kann ebenfalls mit einem Beschleunigungssensor **32** versehen sein, insbesondere wenn das anwenderseitige Modul **9** am Handgelenk getragen wird. Der Beschleunigungssensor **32** des anwenderseitigen Moduls **9** kann gleich dem Beschleunigungssensor **13** des geräteseitigen Moduls **8** ausgelegt sein. Der Beschleunigungssensor **32** diskriminiert zwischen Beschleunigungswerten über und unterhalb eines Schwellwertes. Der Beschleunigungssensor **32** triggert einen Taktgeber **33,** dessen Takt der Senderate des geräteseitigen Moduls **8** entspricht. Die Empfangseinheit **26** empfängt nur Funksignale **18,** die in Phase mit dem Taktgeber **33** empfangen werden, bzw. filtert Funksignale **18** aus, die asynchron oder außer Phase zu dem Taktgeber **33** empfangen werden. Das anwenderseitige Modul **9** erfasst hiermit zweifelsfrei die Vibrationswerte der von dem Anwender gehaltenen Handwerkzeugmaschine.

Das anwenderseitige Modul **9** kann eine WIFI, GSM oder andere standardisierte Funkschnittstelle beinhalten, welche eine Verbindung zu einer computerbasierten Datenbank ermöglicht. Ein WIFI-Server kann beispielsweise an einer Ausgabe für die Handwerkzeugmaschinen auf der Baustelle installiert sein. Das anwenderseitige Modul **9** wählt sich automatisch in den WIFI-Server bei der Rückgabe der Handwerkzeugmaschinen ein. Die in dem Speicher **15** hinterlegten Belastungsdaten werden von der Funkschnittstelle ausgelesen und auf den WIFI-Server übertragen. Der WIFI-Server reicht die Daten an einer Auswertungseinheit weiter, auf welche der Arbeitgeber oder Baustellenleiter Zugriff hat. Die Auswertungseinrichtung ermittelt vorzugsweise eine Prognose, ob bei der aktuellen Arbeitsbelastung der Arbeitgeber die vom Gesetzgeber beschränkte Vibrationsdosis überschreiten wird.

## Patentansprüche

1. Steuerungsverfahren eines Vibrationsdosimeters (7) das ein an einer vibrierenden Handwerkzeugmaschine (1) zu befestigendes, geräteseitigen Modul (8) mit einem in einer Kennung codierten Vibrationsbelastungswert, einem Taktgeber (11), einem Zähler (12), einem Beschleunigungssensor (13) und einer Sendeeinheit (14) und ein von einem Anwender zu tragendes, anwenderseitiges Modul (9) mit einer Empfangseinheit (26), einer Uhr (27), einem Speicher (30) und einer Auswertungseinheit (34) aufweist, mit den Schritten:
Ausgeben eines Wecksignals (19), wenn ein von dem Beschleunigungssensor (13) erfasster Beschleunigungswert in dem geräteseitigen Modul (8) größer als ein Schwellwert ist,
Starten eines periodischen Taktsignals (22) des Taktgebers (11) und Rücksetzen des Zählers (12) durch das Wecksignal (19),
periodisches Inkrementieren des Zählers (12) durch das Taktsignal (22),
periodisches Senden eines Funksignals (18) mittels der Sendeeinheit (14), wobei das Funksignal (18) den aktuellen Zählerstand des Zählers (12) und die Kennung des geräteseitigen Moduls (8) beinhaltet,
Empfangen des Funksignals (18) mittels der Empfangseinheit (26),
Festhalten eines Zeitsignals der Uhr (27) beim Empfang des Funksignals (18),
Ermitteln des Vibrationsbelastungswerts aus der in dem Funksignal (18) übertragenen Kennung,
Ermitteln einer Dauer der aktuellen Vibrationsbelastung basierend auf dem im Funksignal (18) übertragenen Zählerstand,
Erhöhen der erfassten Vibrationsdosis basierend auf dem Vibrationsbelastungswerts und der Dauer der aktuellen Vibrationsbelastung.

2. Steuerungsverfahren nach Anspruch 1, **dadurch gekennzeichnet, dass** ein Stoppsignal (24) ausgegeben wird, wenn ein von dem Beschleunigungssensor (13) erfasster Beschleunigungswert geringer als der Schwellwert ist und der Taktgeber (11) ansprechend auf das Stoppsignal (24) gestoppt und der Zähler (12) zurückgesetzt wird.

3. Steuerungsverfahren nach Anspruch 2, **dadurch gekennzeichnet, dass** der Vibrationsbelastungswert und die Dauer aus einem vor dem Stoppsignal (24) zuletzt empfangenen Funksignals (18) und das festgehaltenes Zeitsignal in einem Speicher (30) archiviert werden.

4. Steuerungsverfahren nach Anspruch 3, **dadurch gekennzeichnet, dass** die Vibrationsdosis basierend auf den in dem Speicher (30) archivierten Vibrationsbelastungswerten, Dauern und Zeitsignalen und erhöht basierend auf dem Vibrationsbelastungswert und der Dauer der aktuellen Vibrationsbelastung ermittelt wird.

5. Steuerungsverfahren nach einem der vorhergehenden Ansprüche, wobei die Funksignale (18) mit einer Senderate gesendet werden, das anwenderseitige Modul (9) einen anderen Beschleunigungssensor (32) aufweist, **dadurch gekennzeichnet, dass** beginnend mit einem Zeitpunkt an dem eine von dem anderen Beschleunigungssensor (32) erfasste Beschleunigung einen Schwellwert überschreitet, die Empfangseinheit (26) Funksignale (18) nur innerhalb mit der Senderate periodisch wiederkehrenden Zeitfenstern empfängt.

6. Steuerungsverfahren nach einem der vorhergehenden Ansprüche, **dadurch gekennzeichnet, dass** die Empfangseinheit (26) Funksignale (18) ausblendet, deren empfangene Signalleistung geringer als die empfangene Signalleistung einer ein Meter entfernten Sendeeinheit (14) sind.
